# EUROPEAN PATENT APPLICATION

(11) **EP 4 800 223 A1**
(43) Date of publication of application: **02.09.2026**
(21) Application number: 26161450.7
(22) Date of filing: 27.02.2026
(51) Int. Cl.: F01D 11/00, F16J 15/10

(54) **METHOD OF CONTROLLING SEAL PEEL STRENGTH OF A FAN BLADE PLATFORM SEAL ASSEMBLY OF GAS TURBINE ENGINES**

(30) Priority: 28.02.2025 US 202519066687
(71) Applicant: RTX Corporation, Farmington, CT 06032 (US)
(72) Inventor: MACLEOD, Charles Paul, Newington, 06111 (US); AVERY, Bridget, Weatogue, 06089 (US); ROMERO, Rebecca, Wethersfield, 06109 (US)
(74) Representative: Dehns

(57) **Abstract**

A fabric reinforced seal assembly, comprising a substrate; a seal (100) comprising a fabric (108) having a first side (102) facing the substrate, a second side (104) facing away from the substrate and a thickness defined between the first side (102) and the second side (104), and an elastomer (106) infiltrated into the fabric (108) from the second side (102) toward the first side (102), wherein the elastomer (106) extends into the fabric (108) from the second side (104) for a distance of less than or equal to 50% of the thickness of the fabric (108).

## Description

### FIELD

The present disclosure relates to platform seals and, more particularly, to a method of controlling the seal peel strength of a platform seal.

### BACKGROUND

Gas turbine engines typically include a fan section, a compressor section, a combustor section and a turbine section. Different flows of air, fuel and cooling fluids are passed through various components of the gas turbine engine, and seals are used to isolate these flows from each other as needed. Platform seals are used to prevent leakage of gases passing through fan components from passing beneath the platform of the fan blades to reach components beneath the platform. Such seals maintain the integrity of the intended fluid flow paths.

Platform seals are frequently made up of rubber reinforced with fabric which is then affixed, for example with adhesive, to underlying components of the gas turbine engine, for example to the platforms of an array of fan blades of a gas turbine engine. Seal peel strength of such seals is an important characteristic to ensure long useful life of the seal and related components, and one problem with such seals is when they peel from an underlying component at the adhesive, a condition known as banana peeling.

### SUMMARY OF THE DISCLOSURE

The present disclosure is directed to platform seals and control of seal peel strength of such seals.

In one aspect, a fabric reinforced seal assembly comprises a substrate; a seal comprising a fabric having a first side facing the substrate, a second side facing away from the substrate and a thickness defined between the first side and the second side, and an elastomer infiltrated into the fabric from the second side toward the first side, wherein the elastomer extends into the fabric from the second side for a distance of less than or equal to 50% of the thickness of the fabric.

In one non-limiting configuration, the elastomer is selected from the group consisting of rubber, fire resistant silicone, fluorosilicone, nitrile, neoprene, ethylene propylene, fluorocarbon and combinations thereof.

In another non-limiting configuration, the elastomer is synthetic rubber.

In still another non-limiting configuration, the synthetic rubber is silicone.

In a further non-limiting configuration, the rubber is penetrated into the fabric an amount of between 20 and 40% of the thickness of the fabric.

In a still further non-limiting configuration, the seal assembly further comprising an adhesive between the first side and the substrate.

In another non-limiting configuration, the substrate comprises aluminum.

In still another non-limiting configuration, the fabric has a thickness of about 0.02" (0.51 mm) and the silicone is infiltrated into the fabric a distance of between 0.004 and 0.008" (0.1 mm and 0.2 mm).

In a further non-limiting configuration, the seal is a platform seal.

In a still further non-limiting configuration, the substrate is a component of a fan blade platform.

In another non-limiting configuration, the fabric is selected from the group consisting of polyester, nylon, nomex, glass, Kevlar/aramid, polyester with carbon nylon, polyphenylene sulfide (PPS), polyacrylonitrile (PAN) and combinations thereof.

In still another non-limiting configuration, the adhesive is selected from the group consisting of epoxy, Room-Temperature-Vulcanizing (RTV) silicone, polysulfide sealant, polyurethane adhesive sealant, silicone and combinations thereof.

In another aspect, a method for making a fabric reinforced seal assembly comprises the steps of providing a fabric having a first side and a second side and a thickness defined between the first side and the second side; penetrating the fabric with an elastomer from the second side toward the first side, wherein the elastomer is penetrated into the fabric for a distance of less than or equal to 50% of the thickness of the fabric; and affixing the first side of the fabric to a substrate using an adhesive, wherein the adhesive penetrates into the fabric from the first side.

In a non-limiting configuration, the elastomer is selected from the group consisting of rubber, fire resistant silicone, fluorosilicone, nitrile, neoprene, ethylene propylene, fluorocarbon and combinations thereof.

In another non-limiting configuration, the elastomer is synthetic rubber.

In still another non-limiting configuration, the synthetic rubber is silicone.

In a further non-limiting configuration, the elastomer is penetrated into the fabric an amount of between 20 and 40% of the thickness of the fabric.

In a still further non-limiting configuration, the substrate comprises aluminum.

In another non-limiting configuration, the seal assembly is a platform seal.

In still another non-limiting configuration, the substrate is a component of a fan blade platform.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 schematically illustrates a platform seal assembly;
FIG. 2 illustrates a rubber penetrated fabric component of a seal assembly;
FIG. 3 illustrates another rubber penetrated fabric component of a seal assembly;
FIG. 4 illustrates the relationship between peel strength and penetration thickness in a fabric penetrated with rubber;
FIGS. 5A-B, 6A-B and 7A-B illustrates an interface at failure for a fully penetrated material (FIGS. 5A, 5B), for a fabric material having a 0.008" (0.2 mm) penetration (FIGS. 6A, 6B) and for a fabric material having a 0.004" (0.1 mm) penetration (FIGS. 7A, 7B);
FIGS 8A-B, 9A-B and 10A-B illustrate cross section and top views of fabric that partially penetrated at two different levels, and fully penetrated, with rubber; and
FIGS. 11-12 illustrate different mechanisms of failure of seals comprising rubber penetrated fabric.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

This disclosure relates to seals, particularly fabric reinforced rubber or silicone seals. These types of seals have use in numerous applications, one non-limiting embodiment of which is as a platform seal, for example to seal the platform area of blades in a gas turbine engine. These seals minimize leakage around the blade root by preventing air from flowing into the gap between the platform and the fan blade.

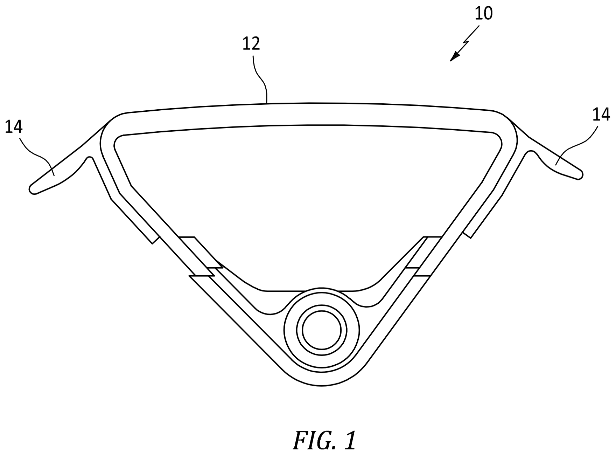

FIG. 1 schematically illustrates a non-limiting embodiment of a platform seal assembly 10 wherein a support structure or substrate 12 supports two seals 14 each of which seal against the platform of an adjacent blade (not shown). This type of seal is frequently in the form of a fabric reinforced elastomer, or rubber such as silicone, seal, which can be attached with adhesive to an underlying substrate such as substrate 12. Good adhesion to the substrate as well as good internal strength of the components of the seal are important in providing the seal assembly with a long lifespan in use, for example in a gas turbine engine.

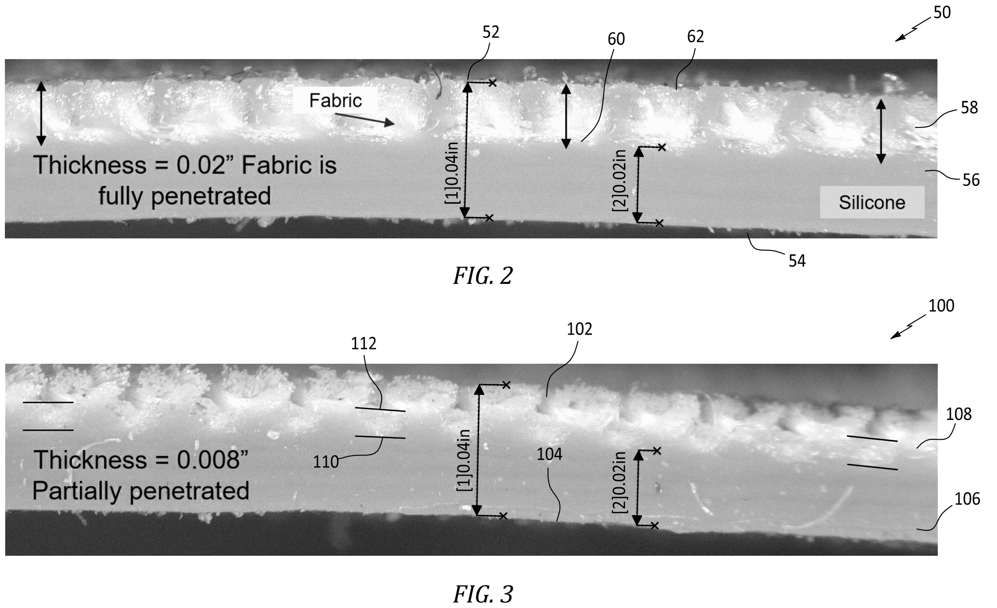

FIG. 2 shows a cross section through a typical fabric reinforced silicone seal 50. The seal has a first side 52 which is attached to a substrate such as substrate 12 in FIG. 1, and a second side 54, facing oppositely from first side 52, which faces away from substrate 12 and seals against an adjacent structure such as the platform of an adjacent fan blade. Seal 50 has an elastomer layer 56, in this case silicone, that penetrates into a fabric layer 58.

This type of seal can fail in different locations and in different ways. One manner of failure is when there is failure at the seal-to-platform adhesive joint, and this mode of failure is typically undesirable. Such failure can be referred to as bond-line failure, and again refers to failure at the adhesive joint between the substrate and the seal. It has been found that the extent to which the elastomer penetrates into the fabric has an impact upon seal peel strength of the finished seal.

The seal 50 as illustrated in FIG. 2 has a fabric layer 58 which may have a thickness, in this non-limiting configuration, of 0.02 inches (0.51 mm). Also as shown in FIG. 2, the elastomer extends from a second surface 54 to a contact surface 60 between the fabric and the rubber, and then into the fabric 58. In the configuration shown in FIG. 2, elastomer 56 extends all the way to the side 62 of fabric 58 that coincides with first surface 52. This configuration is referred to as the fabric being fully penetrated. Specifically, the elastomer (in this case rubber or silicone) extends into fabric 58 from surface 60 to surface 62. In this configuration, it has been found that the seal peel strength of the seal is not as high as desired. Specifically, it has been found that such fully penetrated seals fail at forces that are lower than desired, at the seal-to-platform adhesive joint, a failure mode referred to herein and above as bond-line failure.

FIG. 3 illustrates a non-limiting embodiment wherein the fabric is not fully penetrated. Specifically, in FIG. 3, seal 100 again has a first surface 102 and a second surface 104. Seal 100 has an elastomer layer 106 that extends into a fabric layer 108, but is not fully penetrated into fabric 108. Rather, in this configuration, the elastomer 106 extends from second surface 104 to a contact surface 110 with fabric 108, and into fabric 108 but not all the way to surface 112 of fabric 108. Rather, the elastomer extends from contact surface 110 to a level 112 within fabric 108 that is less than or equal to about 50% of the thickness of fabric 108. In one non-limiting configuration, fabric 108 can have a thickness of 0.02 inches (0.51 mm) and the penetration distance (between surface 110 and level 112) is about 0.008 inches (0.2 mm). As will be further discussed below, this partially penetrated seal configuration leads to an improved seal peel strength and less tendency to banana peeling or failure at the joint between adhesive and substrate.

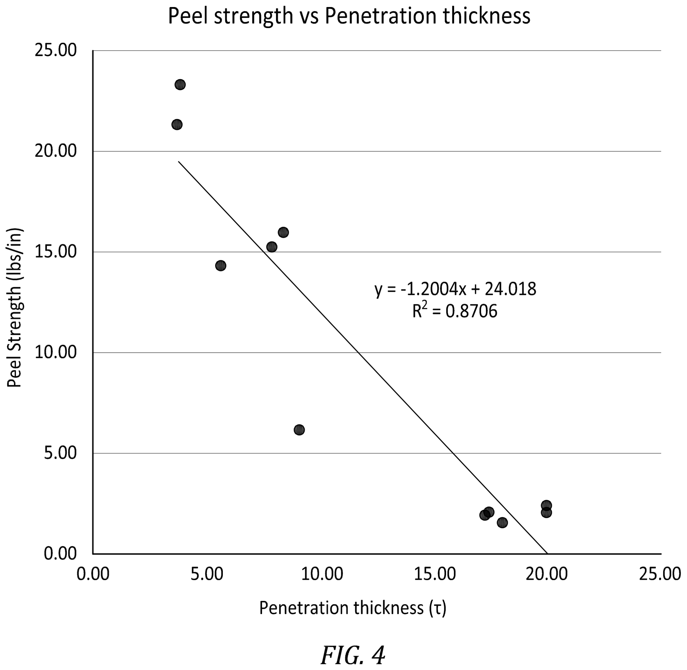

FIG. 4 illustrates a relationship that has been developed between penetration thickness and peel strength for seal configurations as disclosed herein. The data presented is for a seal having a fabric layer with a thickness of 0.02 inches (0.51 mm), or 20.0 thousandths of an inch (0.51 mm). Twelve (12) different ranges of penetration were tested for peel strength using a testing procedure in line with ASTM D3167. As can be seen, as the penetration thickness increases, peel strength decreases, and the data shown establish a fairly steep drop in the peel strength. This data establishes that peel strength is at reasonably high values when the penetration thickness is less than about 50% of the fabric thickness, in other words a penetration thickness of less than about 10.00 thousandths (0.25 mm). In one non-limiting configuration, the penetration thickness can be between 20 and 40% of the fabric thickness.

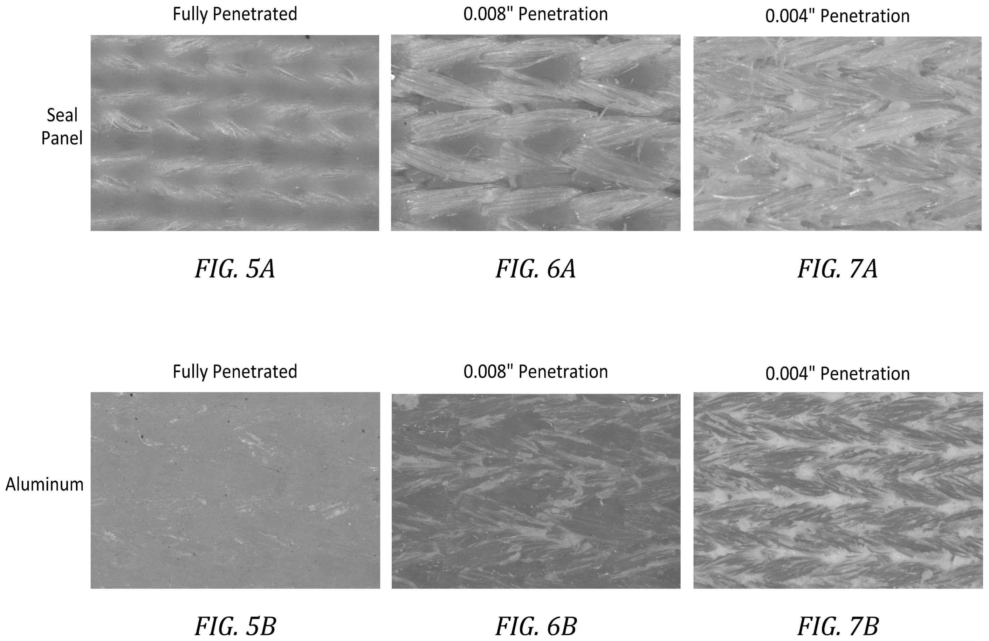

FIGS. 5A, 5B through 7A, 7B illustrate a mechanism of failure for fully penetrated, 0.008 inches penetrated and 0.004 inches (0.1 mm) penetrated samples when tested, again based upon a fabric thickness of 0.02 inches (0.51 mm). FIG. 5A illustrates a top view of a seal panel showing the contact surface corresponding to surface 62 of FIG. 2, and shows that the rubber or silicone is penetrated through to the top fibers of the fabric (fully penetrated). FIG. 5B shows the surface of the aluminum substrate. In the fully penetrated configuration, there are very few fibers stuck to the aluminum surface. This is known as an adhesive failure or bond-line failure, or a CAT 4 failure, and is not generally desirable in the platform seals disclosed herein. There may be other configurations where a seal that is readily peelable from the underlying substrate is desirable, in which case, based upon the present disclosure, it may be desirable to fully penetrate the fabric. However, for seal assemblies in a platform seal setting, this is generally not desired, and resulted in a peel strength of only 2 lbs./in (0.35 N/mm).

FIGS. 6A and 6B illustrate the seal panel and substrate (aluminum) surface for a 0.02 inch (0.51 mm) fabric penetrated to a depth of 0.008 inches (0.2 mm), which corresponds to the configuration also illustrated in FIG. 3. As can be seen in FIG. 6A, the silicone does not fully encompass the fibers of the fabric, which can also be seen in the illustration of FIG. 3. Further, FIG. 6B shows a number of fibers, or fibrillar debris, that are left on the substrate after failure. Further, this configuration shows a much greater peel strength of 15 lbs./in (2.64 N/mm). In the setting of a platform seal assembly, this peel strength is a substantial improvement over that exhibited by the fully penetrated sample of FIGS. 5A, 5B.

FIGS 7A and 7B illustrate a further configuration wherein the silicone penetrated the 0.02 inch fabric (0.51 mm) only to a depth of 0.004 inches (0.1 mm). As shown in FIG. 7A, a much greater amount of fibers are exposed and not encompassed by the silicone. Further, a greater amount of fibers or fibrillar debris are left on the substrate surface. This sample also exhibited an even greater peel strength of 23 lbs./in (4.03 N/mm).

Based upon the examples of FIGS. 5-7, it is believed that the greater peel strength at lower penetration levels is due to the ability of adhesive to contact and engage with fibers of the fabric, rather than the somewhat smooth surface of the adhesive. This further leads to a different type of failure when the samples of FIGS. 6 and 7 do fail, in this case the failure is a cohesive failure within the fabric of the seal, which is referred to as a CAT 3 failure, and which is generally more desirable than a CAT 4 type of failure.

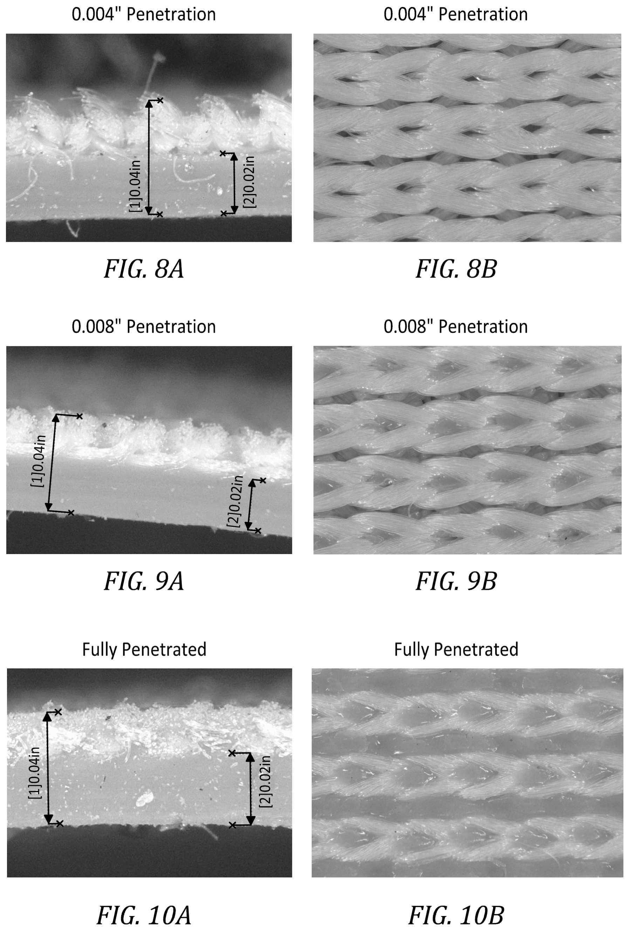

FIGS. 8A, 8B through 10A, 10B further illustrate the examples discussed above, with FIGS. 8A, 8B corresponding to a 0.004 inch (0.1 mm) penetration, FIGS. 9A, 9B corresponding to a 0.008 inch (0.2 mm) penetration, and FIGS. 10A, 10B corresponding to a fully penetrated sample. FIGS 8A, 9A and 10A all show a cross-sectional view through the seal, with surface 104, 54, contact surface 110, 60, and penetration level 112, 62. Corresponding top views of FIGS. 8B, 9B and 10B show correspondingly increased encompassing of the fibers of the fabric by the silicone. Again, as discussed above, it is believed that the greater amount of exposed fibers leads to a greater engaging of the adhesive with the fabric, thus creating a stronger bond between the adhesive and substrate on one side and fabric on the other. This leads to the CAT 3 type cohesive failure within the fabric as shown in FIGS. 6A and 7A, which are desirable in order to provide a greater peel strength.

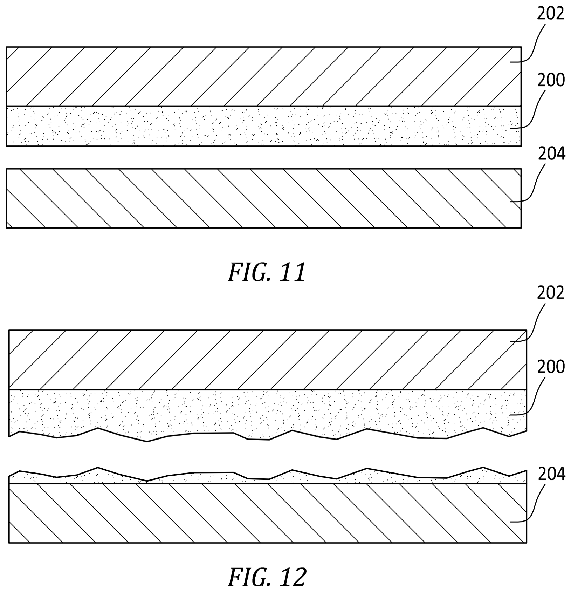

FIGS. 11-12 further illustrate the modes of failure that can occur in a seal assembly as disclosed herein. Each of these figures schematically illustrates a seal 200 between two substrates 202, 204. Seal 200 is secured to substrates 202, 204 with adhesive, which is not schematically illustrated in FIGS. 11-12

In FIG. 11, failure is a bond-line failure, that is, there is failure at the bond-line between the adhesive and the substrate. The failure in this situation is that the assembly has peeled at an interface between seal 200 and substrate 204 which was attached with adhesive. This corresponds to the failure mode exhibited by the examples of FIGS. 2, 5A-B and 10A-B. In FIG. 12, failure is within seal 200, for example within the fabric, and this is referred to as a cohesive failure and is the type of failure represented by the embodiments of FIGS. 3, 6A-B, 7A-B, 8A-B and 9A-B. This corresponds to the configurations disclosed herein wherein the silicone is not fully penetrated into the fabric.

In this disclosure, peel strength of the seal assemblies is discussed, and it should be appreciated that one method of measuring peel strength is done following a test procedure similar to ASTM D3167.

The disclosure above refers to fabric reinforced seals that are secured to substrates with adhesive. With respect to the fabric, suitable fabrics for such seals include, but are not limited to, fabrics selected from the group consisting of polyester, nylon, nomex, glass, Kevlar/aramid, polyester with carbon nylon, polyphenylene sulfide (PPS), polyacrylonitrile (PAN) and combinations thereof

The elastomer for the seal can be any suitable elastomer such as for example silicone, fire resistant silicone, fluorosilicone, nitrile, neoprene, ethylene propylene, fluorocarbon and combinations thereof. The adhesive used to secure the seal to the substrate can be any suitable adhesive, one example of which is epoxy film adhesive. A tradename for one suitable epoxy film adhesive is Henkel Corp Hysol^{®} EA 9628 Epoxy Film Adhesive. Other suitable adhesives include but are not limited to Room-Temperature-Vulcanizing (RTV) Silicone, polysulfide sealant, polyurethane adhesive sealant, silicone and combinations thereof.

Seal assemblies as disclosed herein can be prepared by penetrating liquid rubber such as silicone into a fabric using any suitable technique, for example, calendaring is a suitable process step for infiltrating or penetrating adhesive into the seal as desired.

It should be appreciated that the seal assemblies as disclosed herein provide improved peel strength and resistance to banana peeling, thus providing a seal assembly with a greater potential useful life span.

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the disclosure may be practiced other than as specifically described. Thus, the scope of the present claims is not specifically limited by the details of specific embodiment disclosed herein, but rather the claims define the full and reasonable scope of the disclosure.

## Claims

1. A fabric reinforced seal assembly (10), comprising:
a substrate (12; 202; 204);
a seal (14; 100; 200) comprising a fabric (108) having a first side (102) facing the substrate (12), a second side (104) facing away from the substrate (12; 202; 204) and a thickness defined between the first side (102) and the second side (104), and an elastomer (106) infiltrated into the fabric (108) from the second side (104) toward the first side (102), wherein the elastomer (106) extends into the fabric (108) from the second side (104) for a distance of less than or equal to 50% of the thickness of the fabric (108).

2. The seal assembly of claim 1, further comprising an adhesive between the first side (102) and the substrate (12; 202; 204).

3. The seal assembly of claim 2, wherein the adhesive is selected from the group consisting of epoxy, Room-Temperature-Vulcanizing (RTV) silicone, polysulfide sealant, polyurethane adhesive sealant, silicone and combinations thereof.

4. The seal assembly of any preceding claim, wherein the fabric (108) has a thickness of about 0.02" (0.51 mm) and wherein the elastomer (106) is infiltrated into the fabric (108) a distance of between 0.004 and 0.008" (0.1 mm and 0.2 mm).

5. The seal assembly of any preceding claim, wherein the seal (14; 100; 200) is a platform seal (14; 100; 200).

6. The seal assembly of claim 5, wherein the substrate (12; 202; 204) is a component of a fan blade platform.

7. The seal assembly of any preceding claim, wherein the fabric (108) is selected from the group consisting of polyester, nylon, nomex, glass, Kevlar/aramid, polyester with carbon nylon, polyphenylene sulfide (PPS), polyacrylonitrile (PAN) and combinations thereof.

8. A method for making a fabric reinforced seal assembly (10), comprising the steps of:
providing a fabric (108) having a first side (102) and a second side (104) and a thickness defined between the first side (102) and the second side (104);
penetrating the fabric (108) with an elastomer (106) from the second side (104) toward the first side (102), wherein the elastomer (106) is penetrated into the fabric (108) for a distance of less than or equal to 50% of the thickness of the fabric (108); and
affixing the first side (102) of the fabric (108) to a substrate (12; 202; 204) using an adhesive, wherein the adhesive penetrates into the fabric (108) from the first side (102).

9. The seal assembly of any of claims 1 to 7 or the method of claim 8, wherein the elastomer (106) is selected from the group consisting of rubber, fire resistant silicone, fluorosilicone, nitrile, neoprene, ethylene propylene, fluorocarbon and combinations thereof.

10. The seal assembly or method of claim 9, wherein the elastomer (106) is synthetic rubber.

11. The seal assembly or method of claim 10, wherein the synthetic rubber is silicone.

12. The seal assembly or method of any preceding claim, wherein the elastomer (106) is penetrated into the fabric (108) an amount of between 20 and 40% of the thickness of the fabric (108).

13. The seal assembly or method of any preceding claim, wherein the substrate (12; 202; 204) comprises aluminum.

14. The method of any of claims 8 to 13, wherein the seal assembly (10) is a platform seal.

15. The method of claim 14, wherein the substrate (12; 202; 204) is a component of a fan blade platform.
